# EUROPÄISCHE PATENTSCHRIFT

(11) **EP 4 263 302 B1**
(45) Veröffentlichungstag und Bekanntmachung des Hinweises auf die Patenterteilung: **06.08.2025**
(21) Anmeldenummer: 21835617.8
(22) Anmeldetag: 02.12.2021
(51) Int. Cl.: B60T 8/36

(54) **QUADERFÖRMIGER HYDRAULIKBLOCK FÜR EIN HYDRAULIKAGGREGAT EINER BREMSDRUCKREGELUNG EINER HYDRAULISCHEN FAHRZEUGBREMSANLAGE**
PARALLELEPIPEDIC HYDRAULIC BLOCK FOR A HYDRAULIC UNIT OF A BRAKE PRESSURE CONTROL SYSTEM OF A HYDRAULIC VEHICLE BRAKE SYSTEM
BLOC HYDRAULIQUE PARALLÉLÉPIPÉDIQUE POUR UN GROUPE HYDRAULIQUE D'UNE RÉGULATION DE PRESSION DE FREINAGE D'UN SYSTÈME DE FREINAGE HYDRAULIQUE DE VÉHICULE

(30) Priorität: 17.12.2020 DE 102020216113
(43) Veröffentlichungstag der Anmeldung: 25.10.2023
(73) Patentinhaber: Robert Bosch GmbH, 70442 Stuttgart (DE)
(72) Erfinder: TANDLER, Juergen, 87629 Fuessen (DE); MAYR, Matthias, 87549 Rettenberg (DE); KASERER, Stefan, 87527 Ofterschwang (DE); WEH, Andreas, 87477 Sulzberg (DE)
(86) Internationale Anmeldenummer: PCT/EP2021/083958
(87) Internationale Veröffentlichungsnummer: WO 2022/128507

(56) Entgegenhaltungen:
- WO-A1-2018/166687
- WO-A1-2019/105837
- US-A- 5 244 262
- US-A1- 2019 031 164

## Beschreibung

Die Erfindung betrifft einen Hydraulikblock für ein Hydraulikaggregat einer Bremsdruckregelung einer hydraulischen Fahrzeugbremsanlage mit den Merkmalen des Oberbegriffs des Anspruchs 1. Der Hydraulikblock ist insbesondere für eine Fremdkraft- und/oder eine Schlufpregelung aufweisende Fahrzeugbremsanlage vorgesehen.

### Stand der Technik

Die Offenlegungsschrift DE 10 2016 202 113 A1 offenbart einen quaderförmigen Hydraulikblock für ein Hydraulikaggregat einer Bremsdruckregelung einer hydraulischen Fahrzeugbremsanlage, wobei der Hydraulikblock eine Ventilseite aufweist, die an eine Oberseite des Hydraulikblocks angrenzt und in der Aufnahmen für Magnetventile der Bremsdruckregelung angeordnet sind. Aufnahmen für Auslassventile sind in einer Längsrichtung der Oberseite des Hydraulikblocks und quer zur Oberseite des Hydraulikblocks versetzt in der Ventilseite des Hydraulikblocks angeordnet.

Quaderförmige Hydraulikblöcke für Hydraulikaggregate von Bremsdruckregelungen sind zudem auch aus der WO 2018/166687 A1 und aus der WO 2019/105837 A1 bekannt.

### Offenbarung der Erfindung

Der Hydraulikblock mit den Merkmalen des Anspruchs 1 ist für ein Hydraulikaggregat einer Bremsdruckregelung einer hydraulischen Fahrzeugbremsanlage vorgesehen. Insbesondere ist der erfindungsgemäße Hydraulikblock für eine, eine Schlupfregelung aufweisende und/oder eine Fremdkraft-Fahrzeugbremsanlage vorgesehen. Bremsdruckregelung bedeutet die Erzeugung und Regelung eines Bremsdrucks in der Fahrzeugbremsanlage, in Bremskreisen der Fahrzeugbremsanlage und/oder in an den Hydraulikblock angeschlossenen hydraulischen Radbremsen der Fahrzeugbremsanlage. Sie kann insbesondere auch eine Schlupfregelung umfassen. Schlupfregelungen sind beispielsweise Blockierschutz-, Antriebsschlupf- und/oder Fahrdynamikregelungen, für die die Abkürzungen ABS, ASR und/oder FDR gebräuchlich sind. Schlupfregelungen sind bekannt und werden hier nicht erläutert.

Der Hydraulikblock dient einer mechanischen Befestigung und hydraulischen Verschaltung hydraulischer Bauelemente der Fahrzeugbremsanlage, der Bremsdruckerzugung und/oder der Bremsdruckregelung und/oder der Schlupfregelung. Solche hydraulischen Bauelemente sind unter anderem Magnetventile, Rückschlagventile, Hydrospeicher, Dämpferkammern und Drucksensoren. Die hydraulischen Bauelemente sind in Aufnahmen im Hydraulikblock befestigt, die meist als zylindrische Senkungen, Sacklöcher oder Durchgangslöcher, teilweise mit Durchmesserstufungen, ausgebildet sind. "Verschaltet" bedeutet, dass die Aufnahmen bzw. die in ihnen befestigten hydraulischen Bauelemente durch Leitungen im Hydraulikblock entsprechend einem hydraulischen Schaltplan der Fahrzeugbremsanlage verbunden sind. Die Leitungen sind typischerweise jedoch nicht zwingend im Hydraulikblock gebohrt.

Bestückt mit den hydraulischen Bauelementen der Fahrzeugbremsanlage bzw. ihrer Schlupfregelung bildet der Hydraulikblock das Hydraulikaggregat, wobei "bestückt" bedeutet, dass die hydraulischen Bauelemente in den für sie jeweils vorgesehenen Aufnahmen des Hydraulikblocks befestigt sind.

Außerdem weist der Hydraulikblock insbesondere Anschlüsse für Bremsleitungen, die zu hydraulischen Radbremsen der Fahrzeugbremsanlage führen, auf. Er kann auch Anschlüsse für Bremsleitungen aufweisen, die von einem Hauptbremszylinder kommen, vorzugsweise ist der Hauptbremszylinder jedoch in den Hydraulikblock integriert, das heißt der Hydraulikblock weist beispielsweise eine Hauptbremszylinderbohrung auf.

Die Erfindung ist insbesondere auf die Anordnung der hydraulischen Bauelemente bzw. ihrer Aufnahmen und deren hydraulischer Verbindung im Hydraulikblock gerichtet.

Für eine platzsparende Unterbringung von Einlassventilen und/oder Auslassventilen der Schlupfgegelung ist es vorgesehen, deren Aufnahmen im Hydraulikblock nicht in einer geraden Linie nebeneinander, sondern zusätzlich mit Versatz quer zu ihrer Anordnung nebeneinander im Hydraulikblock anzuordnen. Beispielsweise sind Aufnahmen für Einlassventile abwechselnd auf zwei anstatt auf einer zueinander parallelen Geraden im Hydraulikblock angeordnet. Und/oder es ist beispielsweise eine Aufnahme für ein Auslassventil quer versetzt zu anderen Aufnahmen für Auslassventile in dem Hydraulikblock angeordnet, die auf einer Geraden angeordnet sind.

Erfindungsgemäß weist der Hydraulikblock eine Hauptbremszylinderbohrung mit zwei umlaufende Dichtungsnuten für Kolbendichtungen für einen Hauptbremszylinderkolben auf, wobei eine Aufnahme für ein Auslassventil direkt durch eine Leitung mit der Hauptbremszylinderbohrung kommuniziert, die koaxial durch einen Grund der Aufnahme, radial oder in einer Sekantenrichtung, zwischen den beiden Dichtungsnuten in die Hauptbremszylinderbohrung führt.

Vorzugsweise weist der erfindungsgemäße Hydraulikblock eine Fremdkraftzylinderbohrung zur Erzeugung des Bremsdrucks mit Fremdkraft und/oder eine Simulatorzylinderbohrung oder eine Aufnahme für einen Pedalwegsimulator auf.

Auf eine hier als Oberseite bezeichnete Seite des Hydraulikblocks, die vorzugsweise eine Schmalseite des Hydraulikblocks ist, wird ein Bremsflüssigkeitsvorratsbehälter aufgesetzt. Dazu weist der Hydraulikblock einen oder mehrere Anschlüsse für den Bremsflüssigkeitsvorratsbehälter in der Oberseite auf. Zu einer Befestigung des Bremsflüssigkeitsvorratsbehälter auf der Oberseite des Hydraulikblocks sieht eine Ausgestaltung der Erfindung eine Vertiefung in einer an die Oberseite angrenzenden Seite des Hydraulikblocks vor, die bis zu der Oberseite reicht. In die Vertiefung ragt beispielsweise eine von einer Unterseite des Bremsflüssigkeitsvorratsbehälters abstehende Befestigungslasche, die sich mit beispielsweise einer Schraube in der Vertiefung festlegen lässt, ohne dass ein Schraubenkopf oder ein anderes Teil der Befestigung über eine Oberfläche der angrenzenden Seite des Hydraulikblocks übersteht. Dadurch wird ein Einstecken eines an der angrenzenden Seite vorgesehenen elektrischen Steckers zur Kontaktierung eines Steuergeräts der Bremsdruckregelung nicht behindert.

Zur Verbindung mit der Fremdkraftzylinderbohrung sieht eine Ausgestaltung der Erfindung eine Leitung im Hydraulikblock vor, die von einem der Anschlüsse für den Bremsflüssigkeitsvorratsbehälter in der Oberseite zur Fremdkraftzylinderbohrung führt. Diese Leitung verläuft axial oder achsparallel von dem einen Anschluss des Bremsflüssigkeitsvorratsbehälters zur Fremdkraftzylinderbohrung, an der sie nach einer Abwinklung außen parallel entlangführt und mit einer weiteren Abwinklung in die Fremdkraftzylinderbohrung mündet. Auf diese Weise lässt sich die Fremdkraftzylinderbohrung mit wenigen Abwinklungen mit dem Bremsflüssigkeitsvorratsbehälter verbinden. In der Leitung, insbesondere in dem Anschluss und unmittelbar nach dem Anschluss für den Bremsflüssigkeitsvorratsbehälter kann ein in Richtung der Fremdkraftzylinderbohrung durchströmbares Rückschlagventil vorgesehen sein.

Die übrigen abhängigen Ansprüche haben Weiterbildungen und vorteilhafte Ausgestaltungen der im unabhängigen Anspruch angegebenen Erfindung zum Gegenstand.

Hier als "Leitungen" oder "Bohrungen" beziehungsweise als "Zylinderbohrungen" bezeichnete Durchgangs- oder Sacklöcher können auch anders als durch Bohren hergestellt sein.

Sämtliche in der Beschreibung und der Zeichnung offenbarten Merkmale können einzeln für sich oder in grundsätzlich beliebiger Kombination bei Ausführungsformen der Erfindung verwirklicht sein. Ausführungen der Erfindung, die nicht alle, sondern nur ein oder mehrere Merkmale eines Anspruchs oder einer Ausführungsform der Erfindung aufweisen, sind grundsätzlich möglich.

### Kurze Beschreibung der Zeichnung

Die Erfindung wird nachfolgend anhand einer in der Zeichnung dargestellten Ausführungsform näher erläutert. Es zeigen:
- Figur 1: einen hydraulischen Schaltplan einer eine Schlupfregelung aufweisenden Fremdkraft-Fahrzeugbremsanlage;
- Figur 2: einen erfindungsgemäßen Hydraulikblock in einer perspektivischen Darstellung mit Blick auf eine Ventilseite des Hydraulikblocks;
- Figur 3: den Hydraulikblock aus Figur 2 mit Blick auf eine gegenüberliegende Motorseite des Hydraulikblocks; und
- Figur 4: ein Hydraulikaggregat mit dem Hydraulikblock aus Figuren 2 und 3 in einer perspektivischen Darstellung mit Blick auf die Motorseite.

### Ausführungsform der Erfindung

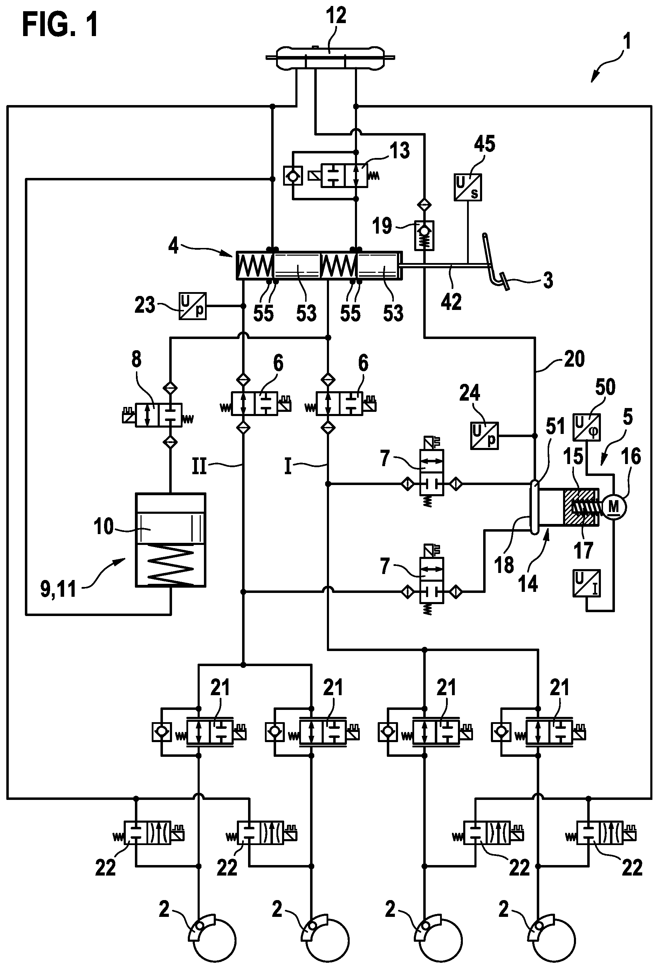

Figur 1 zeigt eine hydraulische Mehrkreis-, nämlich Zweikreis-Fremdkraft-Fahrzeugbremsanlage 1 mit zwei Bremskreisen I, II und vier hydraulischen Radbremsen 2, von denen jeweils zwei an einen Bremskreis I, II angeschlossen sind. Die Fahrzeugbremsanlage 1 weist einen mit einem Fußbremspedal 3 mit Muskelkraft betätigbaren Zweikreis-Hauptbremszylinder 4 und einen Fremdkraft-Bremsdruckerzeuger 5 auf. Die beiden Bremskreise I, II sind hydraulisch parallel an den Hauptbremszylinder 4 und an den Fremdkraft-Bremsdruckerzeuger 5 angeschlossen, wobei jeder Bremskreis I, II durch jeweils ein Trennventil 6 an den Hauptbremszylinder 4 und durch jeweils ein Fremdkraftventil 7 an den Fremdkraft-Bremsdruckerzeuger 5 angeschlossen ist.

In einem der beiden Bremskreise I, das heißt an eine Kammer des Zweikreis-Hauptbremszylinders 4, ist durch ein Simulatorventil 8 eine Kolben-Zylinder-Einheit 9 mit einem federbeaufschlagten Kolben 10 als Pedalwegsimulator 11 angeschlossen.

Der Hauptbremszylinder 4 weist einen drucklosen Bremsflüssigkeitsvorratsbehälter 12 auf, an den die beiden Kammern beziehungsweise Bremskreise I, II des Hauptbremszylinders 4 angeschlossen sind. Eine der beiden Kammern des Hauptbremszylinders 4 ist durch ein Testventil 13 und dazu hydraulisch parallel durch ein in Richtung des Hauptbremszylinders 4 durchströmbares Rückschlagventil und die andere Kammer des Hauptbremszylinders 4 unmittelbar an den Bremsflüssigkeitsvorratsbehälter 12 angeschlossen.

Der Fremdkraft-Bremsdruckerzeuger 5 weist eine Kolben-Zylinder-Einheit 14 auf, deren Kolben 15 zur Erzeugung eines Bremsdrucks mit Fremdkraft mit einem Elektromotor 16 über einen Gewindetrieb 17 in einem Zylinder 18 der Kolben-Zylinder-Einheit 14 verschiebbar ist. An den Zylinder 18 des Fremdkraft-Bremsdruckerzeugers 5 sind die beiden Bremskreise I, II der Fahrzeugbremsanlage 1 durch die beiden Fremdkraftventile 7 angeschlossen.

Der Zylinder 18 der Kolben-Zylinder-Einheit 14 des Fremdkraft-Bremsdruckerzeugers 5 ist durch ein in Richtung des Zylinders 18 durchströmbares Rückschlagventil 19 an den Bremsflüssigkeitsvorratsbehälter 12 und durch eine Leitung 20 ohne Zwischenschaltung eines Ventils unmittelbar an den Bremsflüssigkeitsvorratsbehälter 12 angeschlossen. Der Kolben 10 des Fremdkraft-Bremsdruckerzeugers 5 überfährt zu Beginn seiner Verschiebung eine Mündung dieser Leitung 20, so dass die Kolben-Zylinder-Einheit 14 des Fremdkraft-Bremsdruckerzeugers 5 bei einer Betätigung des Fremdkraft-Bremsdruckerzeugers 5 hydraulisch vom Bremsflüssigkeitsvorratsbehälter 12 getrennt wird.

Jede Radbremse 2 ist durch ein Einlassventil 21 an einen der beiden Bremskreise I, **II** und durch ein Auslassventil 22 an den drucklosen Bremsflüssigkeitsvorratsbehälter 12 angeschlossen.

Der Fremdkraft-Bremsdruckerzeuger 5, die Einlassventile 21 und Auslassventile 22 bilden Bremsdruckregelventilanordnungen, mit denen radindividuelle Schlupfregelungen wie Blockierschutzregelung, Antriebsschlupfregelung und Fahrdynamikregelung durchführbar sind. Diese Schlupfregelungen werden üblicherweise mit ABS, ASR und FDR abgekürzt. Solche Schlupfregelungen sind bekannt und werden hier nicht weiter erläutert.

In der dargestellten und beschriebenen Ausführungsform der Erfindung sind die Trennventile 6, die Fremdkraftventile 7, das Simulatorventil 8, das Testventil 13, die Einlassventile 21 und die Auslassventile 22 2/2-Wege-Magnetventile, wobei die Trennventile 6, das Testventil 13 und die Einlassventile 21 in ihren stromlosen Grundstellungen offen und die Fremdkraftventile 7, das Simulatorventil 8 und die Auslassventile 22 in ihren stromlosen Grundstellungen geschlossen sind.

An eine der beiden Kammern des Hauptbremszylinders 4 und an den Zylinder 18 des Fremdkraft-Bremsdruckerzeuger 5 sind Drucksensoren 23, 24 angeschlossen. An einer das Fußbremspedal 3 mit einem Hauptbremszylinderkolben 53 verbindenden Pedalstange ist ein Weg- oder Positionssensor 45 zur Messung eines Kolben- beziehungsweise Pedalwegs beziehungsweise einer Kolben- beziehungsweise Pedalposition des Hauptbremszylinderkolbens 53 beziehungsweise des Fußbremspedals 3 angeordnet.

Eine Betriebsbremsung erfolgt als Fremdkraftbremsung mit dem Fremdkraft-Bremsdruckerzeuger 5. Dazu werden die Fremdkraftventile 6 geöffnet und es wird ein Bremsdruck mit dem Fremdkraft-Bremsdruckerzeuger 5 erzeugt, der durch die offenen Einlassventile 21 die Radbremsen 2 beaufschlagt, die auf diese Weise betätigt werden.

Während der Betriebsbremsung wird der Hauptbremszylinder 4 durch Schließen der Trennventile 6 hydraulisch von den Bremskreisen I, II getrennt. Er dient als Sollwertgeber für den mit dem Fremdkraft-Bremsdruckerzeuger 5 zu erzeugenden Bremsdruck. Das Simulatorventil 8 wird bei der Betriebsbremsung geöffnet, so dass der Hauptbremszylinder 4 Bremsflüssigkeit in den Pedalwegsimulator 11 verdrängen kann und ein Kolben- und ein Pedalweg am Hauptbremszylinder 4 möglich sind.

Bei einer Störung oder einem Ausfall des Fremdkraft-Bremsdruckerzeugers 5 ist eine Hilfsbremsung durch Muskelkraftbetätigung des Hauptbremszylinders 4 möglich, wobei die Trennventile 6 offen und die Fremdkraftventile 7 geschlossen bleiben.

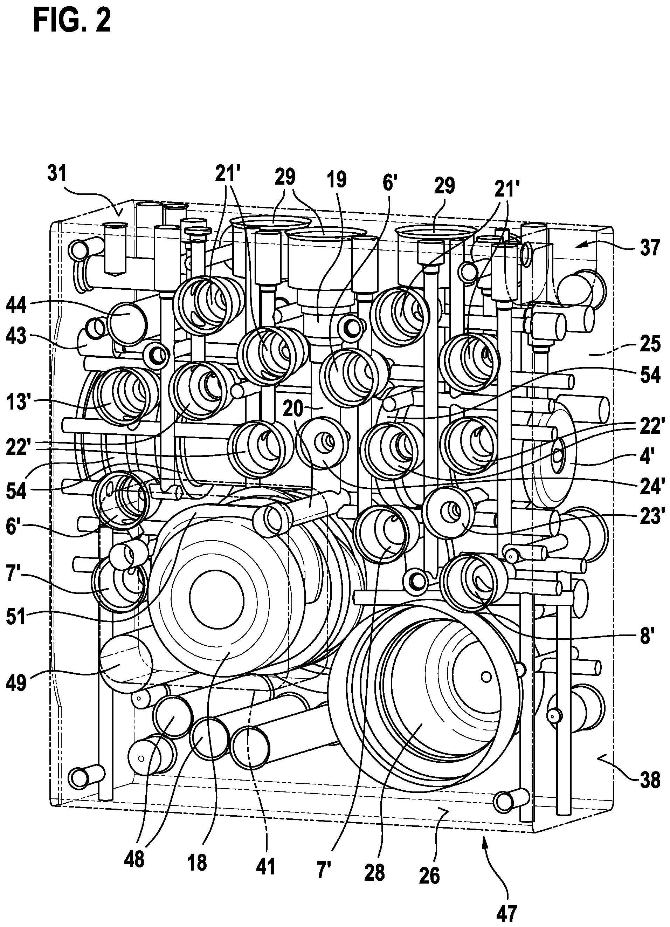

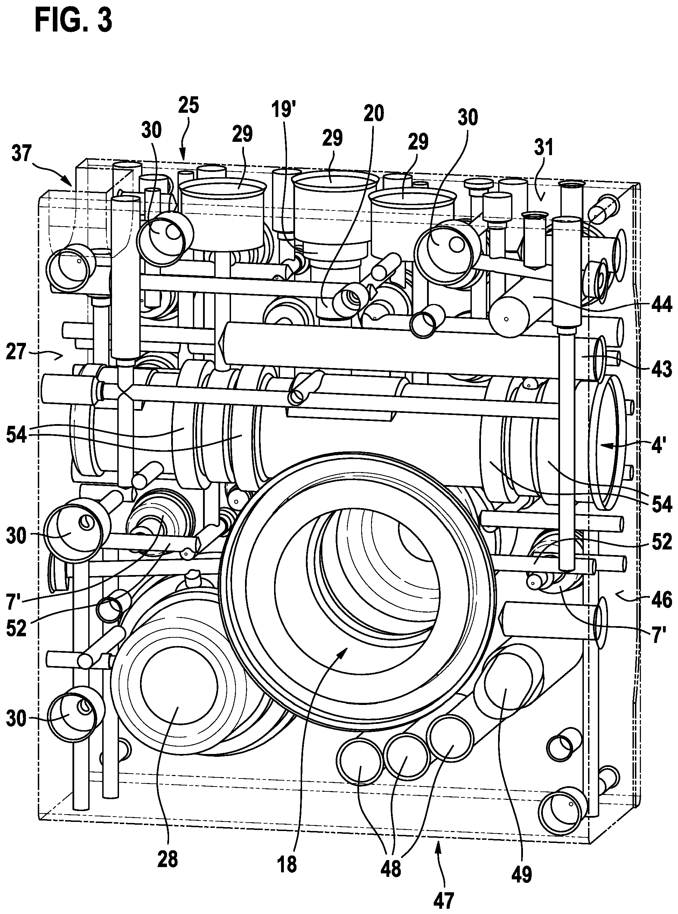

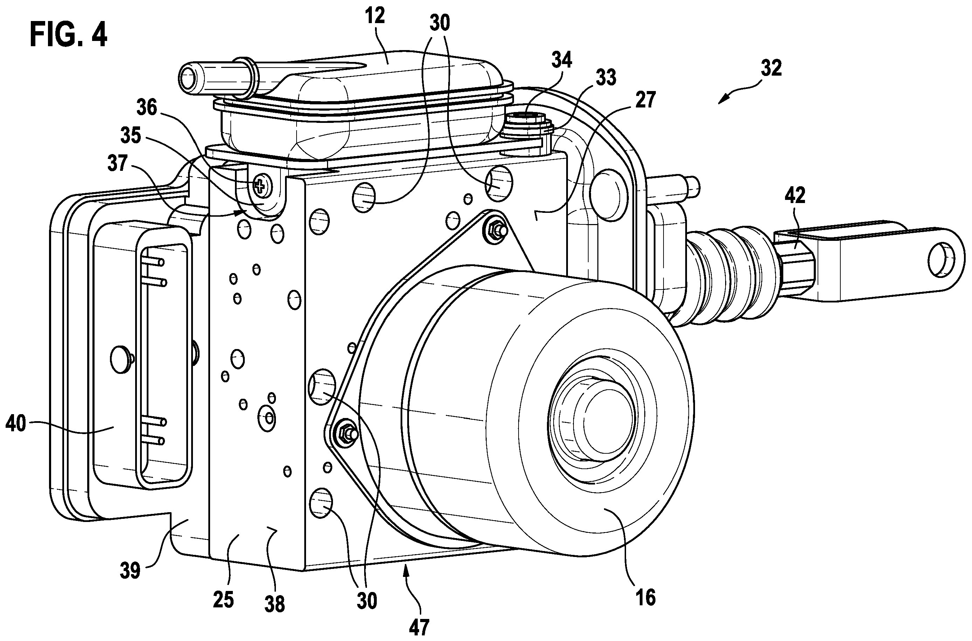

Die hydraulischen Bauelemente der Fahrzeugbremsanlage 1 sind in und an einem Hydraulikblock 25 angeordnet, der in Figuren 2 und 3 dargestellt ist. Der Hydraulikblock 25 ist durchsichtig gezeichnet, damit seine Verbohrung zu sehen ist. Figur 2 zeigt eine Ventilseite 26 und Figur 3 eine gegenüberliegende Motorseite 27 des Hydraulikblocks 25. Der Hydraulikblock 25 ist im Ausführungsbeispiel ein flacher, quaderförmiger Metallblock, der einer mechanischen Befestigung und hydraulischen Verschaltung der hydraulischen Bauelemente der Fahrzeugbremsanlage 1 dient. Bestückt mit den hydraulischen Bauelementen bildet der Hydraulikblock 25 ein Hydraulikaggregat 32 der Fahrzeugbremsanlage 1, das in Figur 4 in perspektivischer Darstellung mit Blick auf die Motorseite 27 dargestellt ist. "Flach" bedeutet, dass der Hydraulikblock 25 ungefähr 3 bis 4 mal so breit oder lang wie dick ist. Zwei gegenüberliegende große Seiten des Hydraulikblocks 25 sind im Ausführungsbeispiel nahezu quadratisch und bilden die Ventilseite 26 und die Motorseite 27.

In dem Hydraulikblock 25 sind eine Hauptbremszylinderbohrung 4', die den Hauptbremszylinder 4 bildet, eine Fremdkraftzylinderbohrung, die den Zylinder 18 des Fremdkraft-Bremsdruckerzeugers 5 bildet, eine Zylinderbohrung 28, die den Zylinder der Kolben-Zylinder-Einheit 9 des Pedalwegsimulators 11 bildet, Aufnahmen für die Magnetventile 6, 7, 8, 13, 21, 22, eine Aufnahme für das Rückschlagventil 19, Aufnahmen für die Drucksensoren 23, 24 und Anschlüsse 29 für den Bremsflüssigkeitsvorratsbehälter 12 und Anschlüsse 30 für die hydraulischen Radbremsen 2 an den Hydraulikblock 25 mittels Bremsleitungen angebracht. Die Aufnahmen für die Magnetventile, das Rückschlagventil und die Drucksensoren sind in Figuren 2 und 3 mit denselben Bezugszahlen wie die jeweiligen hydraulischen Bauelemente in Figur 1 ergänzt um einen "'" versehen.

Die Aufnahmen sind zylindrische, teilweise durchmessergestufte Senkungen oder Sacklöcher im Hydraulikblock 25. Die hydraulischen Bauelemente sind in die Aufnahmen eingesetzt und umlaufend druckdicht verstemmt. Von den Magnetventilen befinden sich hydraulische, die eigentlichen Ventile bildende Abschnitte in den Aufnahmen, Anker und Magnetspulen, die in einem Ventildom untergebracht sind, stehen von der Ventilseite 26 des Hydraulikblocks 1 ab. Die Anschlüsse 29 für den Bremsflüssigkeitsvorratsbehälter 12 sind ebenfalls Sacklöcher, in die Anschlussnippel, die von einem Boden des Bremsflüssigkeitsvorratsbehälters 12 abstehen, gesteckt und mit Dichtringen abgedichtet sind. Die Anschlussbohrungen 30 für die Radbremsen 2 sind ebenfalls Sacklöcher, in denen die zu den Radbremsen 2 führenden Bremsleitungen mit nicht dargestellten Einpressnippeln in sogenannter self-Clinch-Technik druckdicht befestigt sind. Möglich ist der Anschluss der Bremsleitungen beispielsweise auch mit Schraubnippeln. Als Bohrungen im Hydraulikblock 1 ausgeführte Leitungen verbinden die Zylinderbohrungen, Aufnahmen für die hydraulischen Bauelemente und die Anschlüsse 29, 30 für den Bremsflüssigkeitsvorratsbehälter 12 und die Radbremsen 2 entsprechend dem hydraulischen Schaltplan in Figur 1 miteinander.

Mit "Verbohrt" beziehungsweise "Verbohrung" sind die in dem Hydraulikblock 1 angebrachten Zylinderbohrungen, Aufnahmen für die Magnetventile und Anschlussbohrungen sowie die sie entsprechend dem hydraulischen Schaltplan verbindenden, Leitungen bildenden Bohrungen gemeint. Der Hydraulikblock 25 ist kartesische verbohrt, das heißt die Bohrungen, Aufnahmen, Anschlüsse, Leitungen usw. sind parallel und senkrecht zueinander und zu Seiten und Kanten des Hydraulikblocks 25 im Hydraulikblock 25 angebracht. Das schließt einzelne, schräg verlaufende Leitungen und Bohrungen nicht aus. "Bestückt" bedeutet, dass die hydraulischen Bauelemente in ihren Aufnahmen angeordnet sind.

Der Bremsflüssigkeitsvorratsbehälter 12 ist auf eine an die Ventilseite 26 und die Motorseite 27 angrenzende Oberseite 31 des Hydraulikblocks 25 so aufgesetzt, dass die Anschlussnippel am Boden des Bremsflüssigkeitsvorratsbehälters 12 in den Anschlüssen 29 in der Oberseite 31 des Hydraulikblocks 25 stecken. Der Bremsflüssigkeitsvorratsbehälter 12 weist drei Kammern auf, von denen zwei mit den beiden Kammern des Hauptbremszylinders 4 und eine durch das Rückschlagventil 19 und die Leitung 20 mit dem Zylinder 18 der Kolben-Zylinder-Einheit 14 des Fremdkraft-Bremsdruckerzeugers 5 verbunden sind. Die Anschlüssen 29 sind in einer Längsrichtung der Oberseite 31 des Hydraulikblocks 25 hintereinander und etwas V-förmig angeordnet, das heißt ein mittlerer der drei Anschlüsse 29 ist quer zur Oberseite 31 versetzt zu den beiden anderen Anschlüssen 29 in der Oberseite 31 des Hydraulikblocks 25 angeordnet.

Der Bremsflüssigkeitsvorratsbehälter 12 weist zwei Augenlaschen 33 auf, an denen er mit Schulterschrauben 34 auf der Oberseite 31 des Hydraulikblocks 25 befestigt ist und eine vom Boden abstehende Augenlasche 35, an der er mit einer Stiftschraube 36 am Hydraulikblock 25 befestigt ist (Figur 4). Die Stiftschraube 36 ermöglicht einen Längenausgleich bei thermischer Ausdehnung des Hydraulikblocks 25. Die Augenlasche 35 befindet sich in einer Vertiefung 37 in einer an die Oberseite 31, die Ventilseite 26 und die Motorseite 27 angrenzenden Seite 38 des Hydraulikblocks 25, die bis zur Oberseite 31 reicht. Auch ein Schraubenkopf der Stiftschraube 36 ist versenkt in der Vertiefung 37, so dass auf der Seite 38 nichts übersteht.

Auf der Ventilseite 26 des Hydraulikblocks 25 ist ein Steuergerätdeckel 39 mit einem elektronischen Steuergerät für die Bremsdruckregelung angeordnet, das einen vielpolige elektrische Kupplung 40 aufweist, die sich an der Seite 38 des Hydraulikblocks 25 befindet. Durch die versenkte Anordnung der Augenlasche 35 des Bremsflüssigkeitsvorratsbehälters 12 einschließlich der Stiftschraube 36 in der Vertiefung 37 behindern die Augenlasche 35 und die Stiftschraube 36 ein Ein- und Ausstecken eines nicht dargestellten Steckers in die Kupplung 40 nicht.

Die den Hauptbremszylinder 4 bildende Hauptbremszylinderbohrung 4' ist mit Abstand von der Oberseite 31 und parallel zur Oberseite 31 zu der Ventilseite 26 und der Motorseite 27 oberhalb einer Mitte des Hydraulikblocks 25 in dem Hydraulikblock 25 angebracht.

Der Zylinder 18 der Kolben-Zylinder-Einheit 14 des Fremdkraft-Bremsdruckerzeugers 5 ist senkrecht zu der Ventilseite 26 und der Motorseite 27 in der Motorseite 27 in dem Hydraulikblock 25 angebracht. Von der Ventilseite 26 steht eine Erhöhung 41 von dem Hydraulikblock 25 ab, in die hinein sich der Zylinder 18 des Fremdkraft-Bremsdruckerzeugers 5 erstreckt. Der Zylinder 18 der Kolben-Zylinder-Einheit 14 des Fremdkraft-Bremsdruckerzeugers 5 ist senkrecht zur Hauptbremszylinderbohrung 4' und unmittelbar neben der Hauptbremszylinderbohrung 4' im Hydraulikblock 25 angebracht. "Unmittelbar neben" bedeutet, dass zwischen dem Zylinder 18 der Kolben-Zylinder-Einheit 14 des Fremdkraft-Bremsdruckerzeugers 5 und der Hauptbremszylinderbohrung 4' kein Hohlraum im Hydraulikblock 25 angebracht ist.

Der Zylinder 18 der Kolben-Zylinder-Einheit 14 des Fremdkraft-Bremsdruckerzeugers 5 ist wie geschrieben durch das Rückschlagventil 19 mit dem mittleren Anschluss 29 des Bremsflüssigkeitsvorratsbehälters 12 verbunden. Dazu führt die Leitung 20 koaxial von einem Grund des Anschlusses 29 bis nahe zu einem Umfang des Zylinders 18, von wo aus die Leitung 20 rechtwinklig abgewinkelt achsparallel zum Zylinder 18 in der Erhöhung 41 außen an dem Zylinder 18 entlang führt und mit einem Einstich 51 in den Zylinder 18 mündet. Der Einstich 51 ist eine Art umlaufende Nut im Zylinder 18 des Fremdkraft-Bremsdruckerzeugers 5, die sich nur über einen Teil eines Umfangs des Zylinders 18 erstreckt. Sie kann auch vollständig umlaufend ausgeführt sein. Allgemein kann der Einstich 51 auch als Abwinklung aufgefasst werden, durch die die Leitung 20 in den Zylinder 18 mündet. Am Grund des Anschlusses 29 ist das Rückschlagventil 19 in einer Durchmesseraufweitung der Leitung 20 angeordnet. die eine Aufnahme 19' für das Rückschlagventil 19 bildet.

Die Zylinderbohrung 28 des Pedalwegsimulators 11 ist unmittelbar neben dem Zylinder 18 des Fremdkraft-Bremsdruckerzeugers 5 senkrecht in der Ventilseite 26 des Hydraulikblocks 25 zwischen dem Zylinder 18 der Kolben-Zylinder-Einheit 14 des Fremdkraft-Bremsdruckerzeugers 5 und einer Ecke des Hydraulikblocks 25 angebracht. "Unmittelbar neben" bedeutet, dass zwischen der Zylinderbohrung 28 des Pedalwegsimulators 11 und dem Zylinder 18 des Fremdkraft-Bremsdruckerzeugers 5 kein Hohlraum im Hydraulikblock 25 angebracht ist.

Parallel zur und nahe bei der Hauptbremszylinderbohrung 4' weist der Hydraulikblock 25 eine erheblich dünnere Bohrung als Positionsgeberbohrung 43 für einen Hauptbremszylinderkolben (Primär- oder Stangenkolben) 53 auf. Die Positionsgeberbohrung 43 mündet auf der gleichen Seite, im Ausführungsbeispiel auf der Befestigungsseite 46 des Hydraulikblocks 25 wie die Hauptbremszylinderbohrung 4'. In die Positionsgeberbohrung 43 taucht ein stabförmiger Geberhalter, der außerhalb des Hydraulikblocks 25 an einer Kolbenstange 42 angebracht ist, die mit dem Hauptbremszylinderkolben 53 verbunden ist (nicht dargestellt), so dass sich der Geberhalter mit dem Hauptbremszylinderkolben 53 mit bewegt. An dem Geberhalter ist beispielsweise ein Permanentmagnet als Signalgeber befestigt, der sich in der Positionsgeberbohrung 43 befindet.

Senkrecht zu der Positionsgeberbohrung 43 ist ein Sackloch als Aufnahme 44 für den Weg- oder Positionssensor 45 in dem Hydraulikblock 25 angebracht. Die Aufnahme 44 befindet sich oberhalb, das heißt auf einer der Oberseite 31 des Hydraulikblocks 25 zugewandten Seite der Positionsgeberbohrung 43 und nahe an der Mündung der Positiongeberbohrung 43 beziehungsweise nahe an der Mündung der Hauptbremszylinderbohrung 4' beziehungsweise nahe an der Befestigungseite 46 des Hydraulikblocks 25..

Der Hauptbremszylinder 4 und die Positionsgeberbohrung 43 sind an einer Befestigungsseite 46 des Hydraulikblocks 25 offen, die an die Ventilseite 26, die Motorseite 27 und die Oberseite 31 angrenzt und der Seite 38 mit der Vertiefung 37 gegenüber liegt. Mit der Befestigungsseite 46 wird der Hydraulikblock 25 an einer nicht dargestellten Spritzwand eines Kraftwagens befestigt, so dass sich die Oberseite 31 mit dem Bremsflüssigkeitsvorratsbehälter 12 oben befindet.

Koaxial zu dem Zylinder 18 der Kolben-Zylinder-Einheit 14 des Fremdkraft-Bremsdruckerzeugers 5 ist der Elektromotor 16 außen an der Motorseite 27 des Hydraulikblocks 25 angeordnet. Koaxial zum Elektromotor 16 und dem Zylinder 18 sind ein nicht dargestelltes Planetengetriebe als Untersetzungsgetriebe und ein Kugelgewindetrieb zur Wandlung eines Drehantriebs des Elektromotors 16 in eine translatorisch Bewegung zum Verschieben des Kolbens 15 der Kolben-Zylinder-Einheit 14 des Fremdkraft-Bremsdruckerzeugers 5 in einem Motorgehäuse des Elektromotors 16 und in dem Zylinder 18 des Fremdkraft-Bremsdruckerzeugers 5 angeordnet.

Zwischen dem Zylinder 18 der Kolben-Zylinder-Einheit 14 des Fremdkraft-Bremsdruckerzeugers 5 und einer der Oberseite 31 gegenüberliegenden Unterseite 47 des Hydraulikblocks 25 sind drei von der Ventilseite 26 zur Motorseite 27 durchgehende Durchgangslöcher als Motoranschlussbohrungen 48 zu einer Stromversorgung des Elektormotors 16 des Fremdkraft-Bremsdruckerzeugers 5 im Hydraulikblock 25 angebracht. Die Motoranschlussbohrungen 48 sind auf einem gedachten Bogen um den Zylinder 18 herum zwischen dem Zylinder 18 und der Unterseite 47 im Hydraulikblock 25 angebracht.

Außerdem weist der Hydraulikblock 25 eine Signalbohrung 49 für Steuerleitungen und oder Signalleitungen zu oder von dem Elektromotor 16 auf. Durch die Signalbohrung 49 lässt sich beispielsweise ein Drehwinkelsensor 50 des Elektromotors 16 mit dem elektronischen Steuergerät verbinden, das in dem Steuergerätdeckel 39 auf der Ventilseite 26 des Hydraulikblocks 25 angeordnet ist. Die Signalbohrung 49 geht von der Ventilseite 26 zur Motorseite 27 durch und ist zwischen Zylinder 18 des Fremdkraft-Bremsdruckerzeugers 5 und einer Ecke des Hydraulikblocks 25 zwischen der Befestigungsseite 46 und der Unterseite 47 des Hydraulikblocks 25 angeordnet.

Die Aufnahmen für die Magnetventile sind in der Ventilseite 26 des Hydraulikblocks 25 angeordnet. Die Aufnahmen 21' für die Einlassventile 21 sind zwischen einem Grund der Anschlüsse 29 für den Bremsflüssigkeitsvorratsbehälter 12 und der Hauptbremszylinderbohrung 4' nebeneinander und abwechselnd mit Versatz von etwas weniger als ihrem Durchmesser in Richtung der Oberseite 31 und des Hauptbremszylinders 4 in der Ventilseite 26 angebracht.

Von den Aufnahmen 22' für die Auslassventile 22 sind drei auf einer gedachten Geraden parallel zur Oberseite 31 in Höhe der Hauptbremszylinderbohrung 4' nebeneinander in der Ventilseite 26 des Hydraulikblocks 25 angebracht. Diese drei Aufnahmen 22' für die Auslassventile 22 sind in einer Axialebene der Hauptbremszylinderbohrung 4' oder in einer zu der Axialebene der Hauptbremszylinderbohrung 4' parallelen Ebene, die die Hauptbremszylinderbohrung 4' schneidet, angeordnet. Eine erste oder letzte Aufnahme 22' für ein Auslassventil 22 ist in Richtung der Oberseite 31 des Hydraulikblocks 25 versetzt in der Ventilseite 26 des Hydraulikblocks 25 angebracht. Es ist die der Befestigungsseite 46 nächste Aufnahme 22' versetzt zu den anderen drei Aufnahmen 22' für die Auslassventile 22. Die Aufnahmen 21' für die Einlassventile 21 und die Aufnahmen 22' für die Auslassventile 22 für jeweils eine Radbremse 2 sind paarweise untereinander, das heißt senkrecht zu der Oberseite 31 beziehungsweise parallel zu der Befestigungsseite 46 des Hydraulikblocks 25 zueinander versetzt.

Die Hauptbremszylinderbohrung 4' weist für jeden Hauptbremszylinderkolben 53 zwei umlaufende Dichtungsnuten 54 auf, in denen Kolbendichtungen (Dichtringe) 55 angeordnet sind. Die Dichtungsnuten 54 weisen nur einen kleinen axialen Abstand voneinander auf, der ungefähr so groß wie die Dichtungsnuten 54 breit sind. Die drei in Höhe der Hauptbremszylinderbohrung 4' angebrachten Aufnahmen 22' für die Auslassventile 22 kommunizieren direkt durch Leitungen, die koaxial durch einen Grund der Aufnahmen 22' radial oder in einer Sekantenrichtung in die Hauptbremszylinderbohrung 4' führen, mit der Hauptbremszylinderbohrung 4'. Dabei ist eine der Aufnahmen 22' für eines der Auslassventile 22 zwischen zwei der Dichtungsnuten 54 mit der Hauptbremszylinderbohrung 4' verbunden.

Eine Aufnahme 13' für das Testventil 13 ist zwischen der zu den anderen versetzten Aufnahmen 22' für die Auslassventile 22 und der Befestigungsseite 46 des Hydraulikblocks 25 in der Ventilseite 26 des Hydraulikblocks 25 angebracht.

In einer Mitte zwischen den Aufnahmen 22' für die Auslassventile 22 ist eine flache Senkung als Aufnahme 24' für den Drucksensor 24 für den Zylinder 18 des Fremdkraft-Bremsdruckerzeugers 5 in der Ventilseite 26 des Hydraulikblocks 25 angebracht. Sie kommuniziert durch eine koaxiale Bohrung in ihrem Grund mit der Leitung 20, die von dem mittleren Anschluss 29 für den Bremsflüssigkeitsvorratsbehälter 12 zum Zylinder 18 des Fremdkraft-Bremsdruckerzeugers 5 führt.

Eine Aufnahme 23' für den Drucksensor 23 des Hauptbremszylinders 4 ist etwas unterhalb der Hauptbremszylinderbohrung 4' und nahe ihres geschlossenen Endes in der Ventilseite 26 des Hydraulikblocks 25 angebracht. Die Aufnahe 23' für den Drucksensor 23 kommuniziert direkt durch eine Leitung, die koaxial durch den Grund der Aufnahme 23' in einer Sekantenrichtung in die Hauptbremszylinderbohrung 4' führt, mit der Hauptbremszylinderbohrung 4'.

Zwischen der Aufnahme 23' für den Drucksensor 23 des Hauptbremszylinders 4 und dem Zylinder 18 des Fremdkraft-Bremsdruckerzeugers 5 ist eine Aufnahme 6' für eines der beiden Trennventile 6 in der Ventilseite 26 des Hydraulikblocks 25 angebracht. Die Aufnahme 6' für das andere Fremdkraftventil 6 ist auf einer gegenüberliegenden Seite des Zylinders 18 des Fremdkraft-Bremsdruckerzeugers 5 zwischen dem Zylinder 18 und der Befestigungsseite 46 des Hydraulikblocks 25 in der Ventilseite 26 des Hydraulikblocks 25 angebracht.

Aufnahmen 7' für die Fremdkraftventile 7 sind auf gegenüberliegenden Seiten des Zylinders 18 des Fremdkraft-Bremsdruckerzeugers 5 in der Ventilseite 26 des Hydraulikblocks 25 angebracht. Eine der beiden Aufnahmen 7' befindet sich zwischen der Aufnahme 23' für den Drucksensor 23 des Hauptbremszylinders 4 und die andere Aufnahme 7' auf der gegenüberliegenden Seite des Zylinders 18 zwischen diesem und der Befestigungsseite 46 des Hydraulikblocks 25. Die beiden Aufnahmen 7' für die Fremdkraftventile 7 kommunizieren durch eine Leitung 52 mit dem Zylinder 18 des Fremdkraft-Bremsdruckerzeugers 5, die parallel zu der Oberseite 31 und senkrecht zu der Befestigungsseite 46 des Hydraulikblocks 25 durch den Hydraulikblock 25 verläuft.

Eine Aufnahme 8' für das Simulatorventil 8 befindet sich zwischen der Aufnahme 23' für den Drucksensor 23 des Hauptbremszylinders 4 und der Zylinderbohrung 28 des Pedalwegsimulators 11 versetzt zur Zylinderbohrung 28 in Richtung der die Vertiefung 37 aufweisenden Seite 38 des Hydraulikblocks 25.

## Patentansprüche

1. Quaderförmiger Hydraulikblock für ein Hydraulikaggregat einer Bremsdruckregelung einer hydraulischen Fahrzeugbremsanlage, wobei der Hydraulikblock (25) eine Ventilseite (26) aufweist, die an eine Oberseite (31) des Hydraulikblocks (25) angrenzt und in der Aufnahmen (6', 7', 8', 13', 21', 22') für Magnetventile (6, 7, 8, 13, 21, 22) der Bremsdruckregelung angeordnet sind, wobei Aufnahmen (21') für Einlassventile (21) und/oder Aufnahmen (22') für Auslassventile (22) der Bremsdruckregelung in einer Längsrichtung der Oberseite (31) des Hydraulikblocks (25) und quer zur Oberseite (31) des Hydraulikblocks (25) versetzt in der Ventilseite (26) des Hydraulikblocks (25) angeordnet sind,
und wobei der Hydraulikblock (25) eine Hauptbremszylinderbohrung (4') mit zwei umlaufende Dichtungsnuten (54) für Kolbendichtungen (55) für einen Hauptbremszylinderkolben (53) aufweist,
**dadurch gekennzeichnet,**
**dass** eine Aufnahme (22') für ein Auslassventil (22) direkt durch eine Leitung mit der Hauptbremszylinderbohrung (4') kommuniziert, die koaxial durch einen Grund der Aufnahme (22') radial oder in einer Sekantenrichtung zwischen den beiden Dichtungsnuten (54) in die Hauptbremszylinderbohrung (4') führt.

2. Hydraulikblock nach Anspruch 1, **dadurch gekennzeichnet, dass** in der Längsrichtung der Oberseite (31) des Hydraulikblocks (25) nebeneinander angordnete Aufnahmen (21') für die Einlassventile (21) abwechselnd quer zur Oberseite (31) des Hydraulikblocks (25) versetzt in der Ventilseite (26) des Hydraulikblocks (25) angeordnet sind und/oder dass eine Aufnahme (22') für ein Auslassventil (22) quer zur Oberseite (31) des Hydraulikblocks (25) versetzt zu anderen Aufnahmen (22') für Auslassventile (22) in der Ventilseite (26) des Hydraulikblocks (25) angeordnet ist.

3. Hydraulikblock nach Anspruch 1 oder 2, **dadurch gekennzeichnet, dass** die Aufnahmen (21') für die Einlassventile (21) und die Aufnahmen (22') für die Auslassventile (22) für jeweils eine Radbremse (2) paarweise senkrecht zu der Oberseite (31) des Hydraulikblocks (25) zueinander versetzt in der Ventilseite (26) des Hydraulikblocks (25) angeordnet sind und/oder dass die Aufnahmen (21') für die Einlassventile (21) und die Aufnahmen (22') für die Auslassventile (22) für jeweils eine Radbremse (2) paarweise parallel zu einer Befestigungsseite (46) des Hydraulikblocks (25) zueinander versetzt in der Ventilseite (26) des Hydraulikblocks (25) angeordnet sind.

4. Hydraulikblock nach einem oder mehreren der Ansprüche 1 bis 3, **dadurch gekennzeichnet, dass** eine Aufnahme (22') für ein Auslassventil (22) in einer Axialebene der Hauptbremszylinderbohrung (4') oder in einer zu der Axialebene der Hauptbremszylinderbohrung (4') parallelen Ebene, die die Hauptbremszylinderbohrung (4') schneidet, angeordnet ist.

5. Hydraulikblock nach einem der Ansprüche 3 oder 4, sofern Anspruch 4 von Anspruch 3 abhängig ist,
**dadurch gekennzeichnet, dass** der Hydraulikblock (25) eine Aufnahme (7') für ein Fremdkraftventil (7) in der Ventilseite (26) senkrecht zu der Oberseite (31) und/oder parallel zu der Befestigungsseite (46) des Hydraulikblocks (25) versetzt zu einer Aufnahme (21') für ein Einlassventil (21) und/oder zu einer Aufnahme (22') für ein Auslassventil (22) aufweist.

6. Hydraulikblock nach einem der Ansprüche 3, 4, sofern Anspruch 4 von Anspruch 3 abhängig ist, oder 5,
**dadurch gekennzeichnet, dass** der Hydraulikblock (25) zwei Aufnahmen (7') für zwei Fremdkraftventile (7) in der Ventilseite (26) beiderseits neben einem Zylinder (18) eines Fremdkraft-Bremsdruckerzeugers (5) aufweist, die durch eine senkrecht zu der Befestigungsseite (46) und/oder parallel zu der Oberseite (31) des Hydraulikblocks (25) im Hydraulikblock (25) verlaufende Leitung (52) mit dem Zylinder (18) verbunden sind.

7. Hydraulikblock nach einem oder mehreren der vorhergehenden Ansprüche, **dadurch gekennzeichnet, dass** der Hydraulikblock (25) eine Aufnahme (24') für einen Drucksensor (24) für einen Fremdkraft-Bremsdruckerzeuger (5) in der Ventilseite (26) auf einer der Oberseite (31) des Hydraulikblocks (25) abgewandten Seite der Aufnahmen (21') für die Einlassventile (21) und/oder zwischen den Aufnahmen (22') für die Auslassventile (22) aufweist.

8. Hydraulikblock nach einem oder mehreren der vorhergehenden Ansprüche, **dadurch gekennzeichnet, dass** der Hydraulikblock (25) einen Zylinder (18) für einen Fremdkraft-Bremsdruckerzeuger (5) senkrecht zur Ventilseite (26) und einen Anschluss (29) für einen Bremsflüssigkeitsvorratsbehälter (12) in der Oberseite (31) aufweist, von dem sich eine Leitung (20) in Richtung des Zylinders (18) des Fremdkraft-Bremsdruckerzeugers (5) erstreckt, die in eine zu dem Zylinder (18) des Fremdkraft-Bremsdruckerzeugers (5) parallele Leitung (20) übergeht, die mit einer Abwinklung, insbesondere durch einen Einstich (51) in den Zylinder (18) des Fremdkraft-Bremsdruckerzeugers (5) mündet.

9. Hydraulikblock nach Anspruch 8, **dadurch gekennzeichnet, dass** der Hydraulikblock (25) drei Anschlüsse (29) für den Bremsflüssigkeitsvorratsbehälter (12) in der Oberseite (31) aufweist, deren mittlerer Anschluss (29) mit dem Zylinder (18) des Fremdkraft-Bremsdruckerzeugers (5) im Hydraulikblock (25) kommuniziert.

10. Hydraulikblock nach einem oder mehreren der vorhergehenden Ansprüche, **dadurch gekennzeichnet, dass,** der Hydraulikblock (25) in einer an die Oberseite (31) und an die Ventilseite (26) angrenzenden Seite (38) eine bis zur Oberseite (31) reichende Vertiefung (37) für eine Befestigung eines Bremsflüssigkeitsvorratsbehälters (12) auf der Oberseite (31) des Hydraulikblocks (25) aufweist.

11. Hydraulikblock nach einem oder mehreren der vorhergehenden Ansprüche, **dadurch gekennzeichnet, dass** der Hydraulikblock (25) eine zu der Hauptbremszylinderbohrung (4') parallele Positionsgeberbohrung (43) für einen Positionsgeber für einen Hauptbremszylinderkolben (53) und eine Aufnahme (44) für einen Weg- oder Positionssensor (45) aufweist, die in einem Abstand von nicht mehr als der Dicke des Hydraulikblocks (25) senkrecht zur Ventilseite (26) von einer an die Oberseite (31) und an die Ventilseite (26) des Hydraulikblocks (25) angrenzenden Befestigungsseite (46) und/oder von der Oberseite (31) des Hydraulikblocks (25) angeordnet ist.

## Claims

1. Cuboid hydraulic block for a hydraulic unit of a brake pressure control system of a hydraulic vehicle brake system, wherein the hydraulic block (25) has a valve side (26) which adjoins an upper side (31) of the hydraulic block (25) and in which receptacles (6', 7', 8', 13', 21', 22') for solenoid valves (6, 7, 8, 13, 21, 22) of the brake pressure control system are arranged, wherein receptacles (21') for inlet valves (21) and/or receptacles (22') for outlet valves (22) of the brake pressure control system are arranged in a longitudinal direction of the upper side (31) of the hydraulic block (25) and transversely with respect to the upper side (31) of the hydraulic block (25) offset in the valve side (26) of the hydraulic block (25),
and wherein the hydraulic block (25) has a brake master cylinder bore (4') with two circumferential seal grooves (54) for piston seals (55) for a brake master cylinder piston (53), **characterized in that** that a receptacle (22') for an outlet valve (22) communicates directly through a line with the brake master cylinder bore (4'), which coaxially leads into the brake master cylinder bore (4') through a base of the receptacle (22') radially or in a secant direction between the two seal grooves (54).

2. Hydraulic block according to Claim 1, **characterized in that**, in the longitudinal direction of the upper side (31) of the hydraulic block (25), receptacles (21') for the inlet valves (21) are arranged alternately transversely with respect to the upper side (31) of the hydraulic block (25) offset in the valve side (26) of the hydraulic block (25), and/or **in that** a receptacle (22') for an outlet valve (22) is arranged transversely with respect to the upper side (31) of the hydraulic block (25) offset from other receptacles (22') for outlet valves (22) in the valve side (26) of the hydraulic block (25).

3. Hydraulic block according to Claim 1 or 2, **characterized in that** the receptacles (21') for the inlet valves (21) and the receptacles (22') for the outlet valves (22) for each wheel brake (2) are arranged in pairs perpendicularly with respect to the upper side (31) of the hydraulic block (25) offset from each other in the valve side (26) of the hydraulic block (25), and/or **in that** the receptacles (21') for the inlet valves (21) and the receptacles (22') for the outlet valves (22) for each wheel brake (2) are arranged in pairs parallel to a fastening side (46) of the hydraulic block (25) offset from each other in the valve side (26) of the hydraulic block (25).

4. Hydraulic block according to one or more of Claims 1 to 3, **characterized in that** a receptacle (22') for an outlet valve (22) is arranged in an axial plane of the brake master cylinder bore (4') or in a plane parallel to the axial plane of the brake master cylinder bore (4'), which intersects the brake master cylinder bore (4').

5. Hydraulic block according to either of Claims 3 or 4, if Claim 4 is dependent on Claim 3, **characterized in that** that the hydraulic block (25) has a receptacle (7') for a power assistance valve (7) in the valve side (26) perpendicularly with respect to the upper side (31) and/or parallel to the fastening side (46) of the hydraulic block (25) offset from a receptacle (21') for an inlet valve (21) and/or from a receptacle (22') for an outlet valve (22).

6. Hydraulic block according to either of Claims 3, 4 (if Claim 4 is dependent on Claim 3) or 5, **characterized in that** the hydraulic block (25) has two receptacles (7') for two power assistance valves (7) in the valve side (26) on both sides next to a cylinder (18) of a power assistance brake pressure generator (5), which are connected to the cylinder (18) by a line (52) which runs in the hydraulic block (25) perpendicularly with respect to the fastening side (46) and/or parallel to the upper side (31) of the hydraulic block (25).

7. Hydraulic block according to one or more of the preceding claims, **characterized in that** that the hydraulic block (25) has a receptacle (24') for a pressure sensor (24) for a power assistance brake pressure generator (5) in the valve side (26) on one side of the receptacles (21') facing away from the upper side (31) of the hydraulic block (25) for the inlet valves (21) and/or between the receptacles (22') for the outlet valves (22).

8. Hydraulic block according to one or more of the preceding claims, **characterized in that** the hydraulic block (25) has a cylinder (18) for a power assistance brake pressure generator (5) perpendicularly with respect to the valve side (26) and a connector (29) for a brake fluid reservoir (12) in the upper side (31), from which a line (20) extends in the direction of the cylinder (18) of the power assistance brake pressure generator (5), which passes into a line (20) parallel to the cylinder (18) of the power assistance brake pressure generator (5), which opens with an angle, in particular through a puncture (51), into the cylinder (18) of the power assistance brake pressure generator (5).

9. Hydraulic block according to Claim 8, **characterized in that** the hydraulic block (25) has three connectors (29) for the brake fluid reservoir (12) in the upper side (31), the central connector (29) of which communicates with the cylinder (18) of the power assistance brake pressure generator (5) in the hydraulic block (25).

10. Hydraulic block according to one or more of the preceding claims, **characterized in that** the hydraulic block (25) has, in a side (38) adjacent to the upper side (31) and to the valve side (26), a depression (37) reaching to the upper side (31) for fastening a brake fluid reservoir (12) on the upper side (31) of the hydraulic block (25).

11. Hydraulic block according to one or more of the preceding claims, **characterized in that** the hydraulic block (25) has a position sensor bore (43), parallel to the brake master cylinder bore (4'), for a position sensor for a brake master cylinder piston (53), and a holder (44) for a displacement or position sensor (45), which is located at a distance not exceeding the thickness of the hydraulic block (25) perpendicularly with respect to the valve side (26) from a fastening side (46) adjacent to the upper side (31) and to the valve side (26) of the hydraulic block (25) and/or from the upper side (31) of the hydraulic block (25).

## Revendications

1. Bloc hydraulique parallélépipédique pour un groupe hydraulique d'un dispositif de régulation de la pression de freinage d'un système de freinage hydraulique de véhicule, le bloc hydraulique (25) présentant un côté soupapes (26) qui est adjacent à une face supérieure (31) du bloc hydraulique (25) et dans lequel sont ménagés des logements (6', 7', 8', 13', 21', 22') pour des électrovannes (6, 7, 8, 13, 21, 22) du dispositif de régulation de la pression de freinage, des logements (21') pour des soupapes d'admission (21) et/ou des logements (22') pour des soupapes d'évacuation (22) du dispositif de régulation de la pression de freinage étant ménagés dans une direction longitudinale du côté supérieur (31) du bloc hydraulique (25) et décalés transversalement par rapport au côté supérieur (31) du bloc hydraulique (25) dans le côté soupapes (26) du bloc hydraulique (25),
et le bloc hydraulique (25) présentant un alésage (4') de maître-cylindre de frein présentant deux gorges d'étanchéité périphériques (54) pour des joints de piston (55) pour un piston (53) de maître-cylindre de frein, **caractérisé en ce qu'**un logement (22') pour une soupape d'évacuation (22) communique directement avec l'alésage (4') du maître-cylindre de frein par une conduite qui mène coaxialement à travers un fond du logement (22') radialement ou dans une direction sécante entre les deux gorges d'étanchéité (54) dans l'alésage (4') du maître-cylindre de frein.

2. Bloc hydraulique selon la revendication 1, **caractérisé en ce que**, dans la direction longitudinale du côté supérieur (31) du bloc hydraulique (25), des logements (21') pour les soupapes d'admission (21) agencés les uns à côté des autres sont aménagés en alternance transversalement par rapport au côté supérieur (31) du bloc hydraulique (25) en étant décalés dans le côté soupapes (26) du bloc hydraulique (25) et/ou **en ce qu'**un logement (22') pour une soupape d'évacuation (22) est aménagé transversalement par rapport au côté supérieur (31) du bloc hydraulique (25) en étant décalé dans le côté soupapes (26) du bloc hydraulique (25) par rapport à d'autres logements (22') pour des soupapes d'évacuation (22).

3. Bloc hydraulique selon la revendication 1 ou la revendication 2, **caractérisé en ce que** les logements (21') pour les soupapes d'admission (21) et les logements (22') pour les soupapes d'évacuation (22) pour chaque frein de roue (2) sont aménagés par paires perpendiculairement au côté supérieur (31) du bloc hydraulique (25) en étant décalés les uns par rapport aux autres dans le côté soupapes (26) du bloc hydraulique (25) et/ou **en ce que** les logements (21') pour les soupapes d'admission (21) et les logements (22') pour les soupapes d'évacuation (22) pour chaque frein de roue (2) sont aménagés par paires parallèlement à un côté de fixation (46) du bloc hydraulique (25) et en étant décalés les uns par rapport aux autres dans le côté soupapes (26) du bloc hydraulique (25).

4. Bloc hydraulique selon une ou plusieurs des revendications 1 à 3, **caractérisé en ce qu'**un logement (22') pour une soupape de sortie (22) est agencé dans un plan axial de l'alésage (4') de maître-cylindre de frein ou dans un plan parallèle au plan axial de l'alésage (4') de maître-cylindre de frein qui coupe l'alésage (4') de maître-cylindre de frein.

5. Bloc hydraulique selon l'une des revendications 3 ou 4, dans la mesure où la revendication 4 dépend de la revendication 3, **caractérisé en ce que** le bloc hydraulique (25) présente, dans le côté soupapes (26) perpendiculairement au côté supérieur (31) et/ou parallèlement au côté de fixation (46) du bloc hydraulique (25), un logement (7') pour une soupape (7) à commande par action extérieure, décalé par rapport à un logement (21') pour une soupape d'admission (21) et/ou à un logement (22') pour une soupape d'évacuation (22).

6. Bloc hydraulique selon l'une des revendications 3, 4, dans la mesure où la revendication 4 dépend de la revendication 3, ou 5, **caractérisé en ce que** le bloc hydraulique (25) comprend, dans le côté soupapes (26), de part et d'autre d'un cylindre (18) d'un générateur (5) de pression de freinage à commande par action extérieure, deux logements (7') pour deux soupapes (7) à commande par action extérieure, qui sont reliés au cylindre (18) par une conduite (52) s'étendant dans le bloc hydraulique (25) perpendiculairement au côté de fixation (46) et/ou parallèlement au côté supérieur (31) du bloc hydraulique (25).

7. Bloc hydraulique selon une ou plusieurs des revendications précédentes, **caractérisé en ce que** le bloc hydraulique (25) comprend, dans le côté soupapes (26) sur un côté des logements (21') pour les soupapes d'admission (21) et/ou entre les logements (22') pour les soupapes d'évacuation (22) opposé au côté supérieur (31) du bloc hydraulique (25), un logement (24') pour un capteur de pression (24) pour un générateur (5) de pression de freinage à commande par action extérieure.

8. Bloc hydraulique selon une ou plusieurs des revendications précédentes, **caractérisé en ce que** le bloc hydraulique (25) présente, perpendiculaire au côté soupapes (26), dans le côté supérieur (31), un cylindre (18) pour un générateur (5) de pression de freinage à commande par action extérieure et un raccord (29) pour un réservoir (12) de liquide de frein, à partir duquel une conduite (20) s'étend en direction du cylindre (18) du générateur (5) de pression de freinage à commande par action extérieure, et se prolonge par une conduite (20) parallèle au cylindre (18) du générateur (5) de pression de freinage à commande par action extérieure, qui débouche dans le cylindre (18) du générateur (5) de pression de freinage à commande par action extérieure, par une partie coudée, en particulier à travers un évidement (51).

9. Bloc hydraulique selon la revendication 8, **caractérisé en ce que** le bloc hydraulique (25) comprend trois raccords (29) pour le réservoir (12) de liquide de frein dans le côté supérieur (31), dont le raccord central (29) communique avec le cylindre (18) du générateur (5) de pression de freinage à commande par action extérieure dans le bloc hydraulique (25).

10. Bloc hydraulique selon une ou plusieurs des revendications précédentes, **caractérisé en ce que** le bloc hydraulique (25) présente, dans un côté (38) adjacent au côté supérieur (31) et au côté soupapes (26), un évidement (37) s'étendant jusqu'au côté supérieur (31) pour la fixation d'un réservoir (12) de liquide de frein sur le côté supérieur (31) du bloc hydraulique (25).

11. Bloc hydraulique selon une ou plusieurs des revendications précédentes, **caractérisé en ce que** le bloc hydraulique (25) présente un alésage (43) de capteur de position parallèle à l'alésage (4') de maître-cylindre de frein pour un capteur de position pour un piston (53) de maître-cylindre de frein et un logement (44) pour un capteur de course ou de position (45), qui est agencé à une distance ne dépassant pas l'épaisseur du bloc hydraulique (25) perpendiculairement au côté soupapes (26) à partir d'un côté de fixation (46) adjacent au côté supérieur (31) et au côté soupapes (26) du bloc hydraulique (25) et/ou à partir du côté supérieur (31) du bloc hydraulique (25).
